# EUROPEAN PATENT SPECIFICATION

(11) **EP 4 660 082 B1**
(45) Date of publication and mention of the grant of the patent: **18.03.2026**
(21) Application number: 24382594.0
(22) Date of filing: 03.06.2024
(51) Int. Cl.: B64G 1/22

(54) **HOLD-DOWN AND RELEASE SYSTEM FOR STACKED SPACECRAFT**
NIEDERHALTE- UND FREIGABESYSTEM FÜR GESTAPELTE RAUMFAHRZEUGE
SYSTÈME DE RETENUE ET DE LIBÉRATION POUR ENGIN SPATIAL EMPILÉ

(43) Date of publication of application: 10.12.2025
(73) Proprietor: Airbus Defence and Space, S.A., 28906 Getafe (Madrid) (ES)
(72) Inventor: ANDRÉS MATEY, Juan Miguel, 28906 Getafe (ES); GRANDE SÁEZ, Eugenio, 28906 Getafe (ES); MORA PLAZA, Jose Luis, 28906 Getafe (ES); PLAZA BAONZA, Miguel Ángel, 28906 Getafe (ES); CESPEDOSA CASTÁN, Fernando José, 28906 Getafe (ES)
(74) Representative: Elzaburu S.L.P.

(56) References cited:
- WO-A1-2023/201261
- CN-B- 112 078 835
- KR-B1- 102 529 856
- US-A1- 2016 318 635

## Description

### Field of the invention

The present invention relates to a hold-down and release system for stacked spacecraft, which is particularly applicable to stacked satellites that need to be secured during launch and released once in orbit. However, it can also be applied to other items and configurations.

### Background

Release systems for spacecraft fixation to launcher and /or together during launch event and released at orbit injection point are currently based on various types of pretensioned fasteners: bars, hold downs, clamp bands or multipoint release devices which are triggered by pyro-devices and/or non-explosive actuators. Each fastener is more suitable for a specific type of items to separate and their particular configuration. In the case of stacked spacecraft, tensioned bars have been the preferred option so far.

After triggering, hold-down and release systems leave the spacecraft free to be ejected and a piece of the hold-down and release system is left with the upper spacecraft or ejected as a debris from the launch pack, which might impact with flight hardware. The rest of the hold-down and release system remains with the lower interface (launcher adapter/dispenser structure), see e.g. document CN 112 078 835.

As indicated, current hold-down and release systems for stacked spacecraft use bars. In some designs, these bars are ejected after use and therefore, they generate space debris. The actuation and release sequence is complex, as two or more actuators are involved.

The hold-down and release system entails an undesired shock due to the sudden reduction of the tension by the triggering device and the energy dissipation of the de-tensioned structures. Bars tension relaxation, and with no energy dissipation, emits shock at compromising levels for sensitive equipment within the launcher and for spacecraft survival. Hold-down and release systems require triggering coordination with the mission steps. Sometimes, more than one signal is simultaneously requested for controlled release events and a device that provide such sequenced energy signals is also requested. It adds further elements to the space system architecture.

Therefore, it would be desirable to have a hold-down and release system for stacked spacecraft with fewer elements that does not emit debris, allows shock reduction, and also minimizes the left over mass on the upper structure.

### Summary of the invention

Thus, it is an object of the invention to provide a hold-down and release system for stacked spacecraft that is able to overcome the mentioned drawbacks.

The invention provides a hold-down and release system for stacked spacecraft, configured to change from a hold-down position to a released position with respect to a launcher, characterized in that it comprises at least one sub-system, each sub-system comprising:
- a cable relaxation and rolling assembly configured to be attached to the launcher, comprising:
   - an inertia drum,
   - an articulated lever configured for engagement and disengagement with the inertia drum at a first end of the articulated lever,
   - an actuator connected to the inertia drum and configured to trigger it,
- a cable comprising a first fitting configured to engage with the articulated lever at a second end of the articulated lever, and having one of its ends connected to the inertia drum, such that the cable can be wound on the inertia drum, and additionally comprising a second fitting on the second end of the cable, and
- a release mechanism, configured to be attached to one end of the outermost stacked spacecraft, and to hold the second fitting placed on the second end of the cable in the hold-down position,
wherein in the hold-down position the articulated lever is engaged with the inertia drum and the first fitting of the cable, and the cable is tensioned between the first fitting and the second fitting to keep the stacked spacecraft together, and in the release position the articulated lever is disengaged with the inertia drum and the first fitting of the cable.

The system of the invention has the following advantages:
- The left-over mass on the outermost of the stacked spacecraft to separate is reduced to a minimum (the release mechanism). No additional hardware is added to the rest of spacecraft.
- No debris is created at release.
- The induced shock is significantly lower than in prior art systems.
- A single actuator, requesting minimum signal energy, is used for tension relaxation, release and rolling function.

Other features and advantages of the present invention will become clear from the following detailed description of an illustrative embodiment and not limiting its purpose in connection with the accompanying figures.

### Description of figures

Figure 1 shows the hold-down and release system for stacked spacecraft of the invention in the hold-down position, corresponding to the flight configuration when the spacecraft are fixed to the launcher.
Figure 2 shows the hold-down and release system for stacked spacecraft of the invention in the released position immediately after the triggering of the actuator.
Figure 3 shows the hold-down and release system for stacked spacecraft of the invention during the cable stowage around the inertia drum.
Figure 4 shows the hold-down and release system for stacked spacecraft of the invention with the final position of the cable in the launcher, and the release of the spacecraft.

### Detailed description of the invention

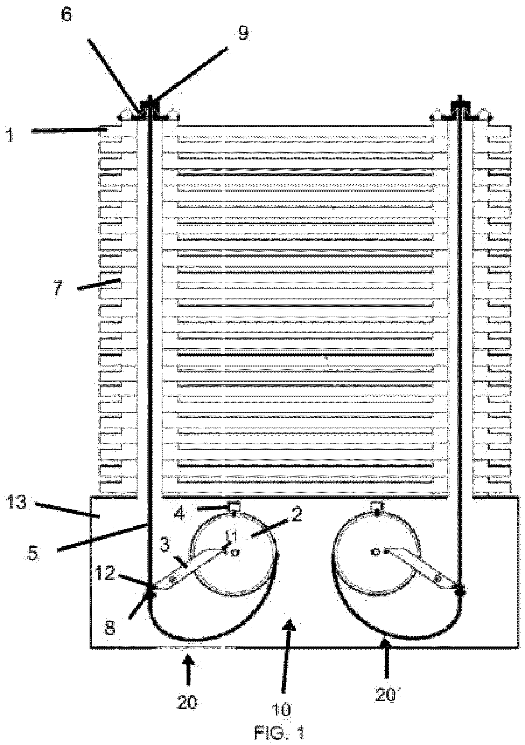

Figure 1 shows the hold-down and release system 10 for stacked spacecraft 7 of the invention in the hold-down position. A launcher 13 is also represented. The system 10 comprises at least one sub-system 20, 20'; in the embodiment of figures 1, 2 and 3 the system 10 comprises two sub-systems 20, 20', which may be arranged symmetrically.

Each sub-system 20, 20' has the following elements:
- a cable relaxation and rolling assembly configured to be attached to the launcher 13, comprising:
   - an inertia drum 2,
   - an articulated lever 3 configured for engagement and disengagement with the inertia drum 2 at a first end 11 of the articulated lever 3, and
   - an actuator 4 connected to the inertia drum 2 and configured to trigger it,

Each sub-system 20, 20' also comprises a cable 5 comprising a first fitting 8, configured to engage with the articulated lever 3 at a second end 12 of the articulated lever 3, and with one of its ends connected to the inertia drum 2, such that the cable 5 can be wound on the inertia drum 2, and additionally comprising a second fitting 9 on the second end of the cable 5.

Each sub-system 20, 20' also comprises a release mechanism 6, configured to be attached to one end of the outermost stacked spacecraft 1, and to hold the second fitting 9 placed on the second end of the cable 5 in the hold-down position. The outermost stacked spacecraft 1 is considered to be the spacecraft in the spacecraft stack furthest from the launcher.

The hold-down position is shown in figure 1, which corresponds to the configuration of the system 10 during flight. In this position the articulated lever 3 is engaged with the inertia drum 2 and the first fitting 8 of the cable 5. The cable 5 is tensioned between the first fitting 8 and the second fitting 9 to keep the stacked spacecraft 7 together, as it crosses the stacked spacecraft 7.

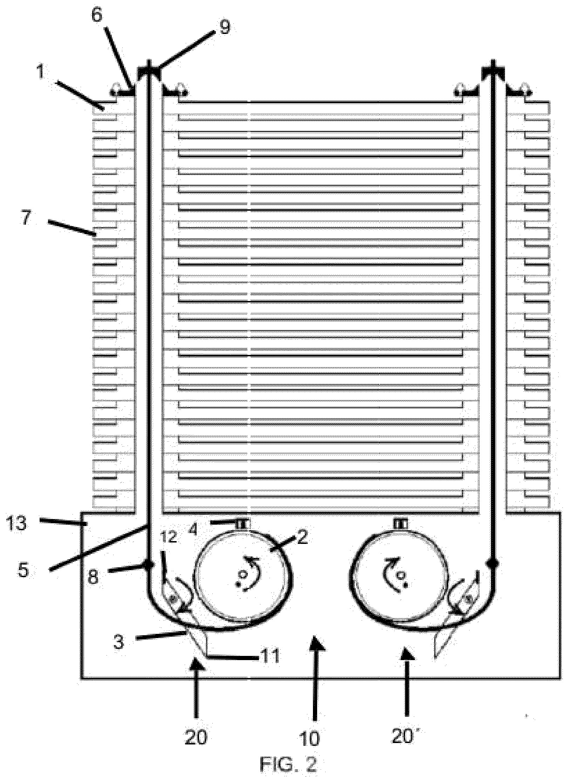

The actuator 4 can trigger the motion of the corresponding hold-down and release sub-system 20, 20' by disengaging the inertia drum 2. This allows the rotation of the articulated lever 3 (see Fig. 2), which causes the initial rotation of the inertia drum 2, and the rolling of the cable 5 on the inertia drum 2. The articulated lever 3 disengages and relaxes the tension of the cable 5, and the rotation of the inertia drum 2 is accelerated. As seen in figure 2, in the release position the articulated lever 3 is disengaged with the inertia drum 2 and the first fitting 8 of the cable 5.

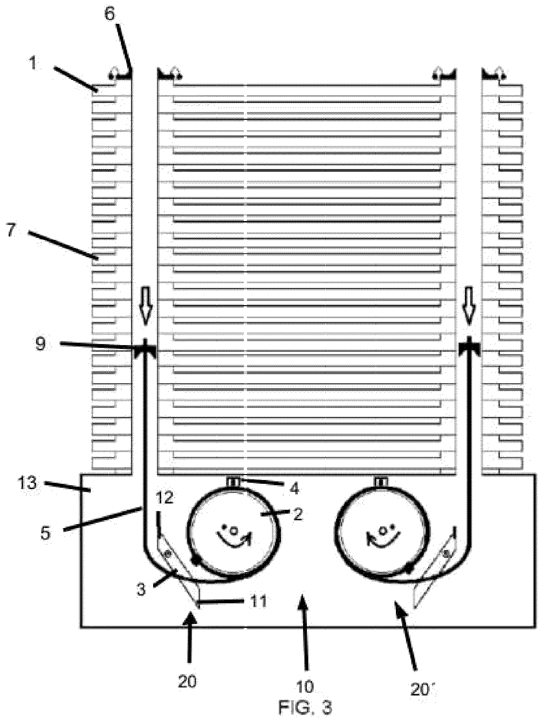

The loss of cable tension allows the release mechanism 6 to open and thus lets the second fitting 9 of the second end of the cable 5 pass through the release mechanism 6. The retraction of the cable 5 is thus possible and the cable 5 is rolled on the inertia drum 2 as it rotates (see figure 3).

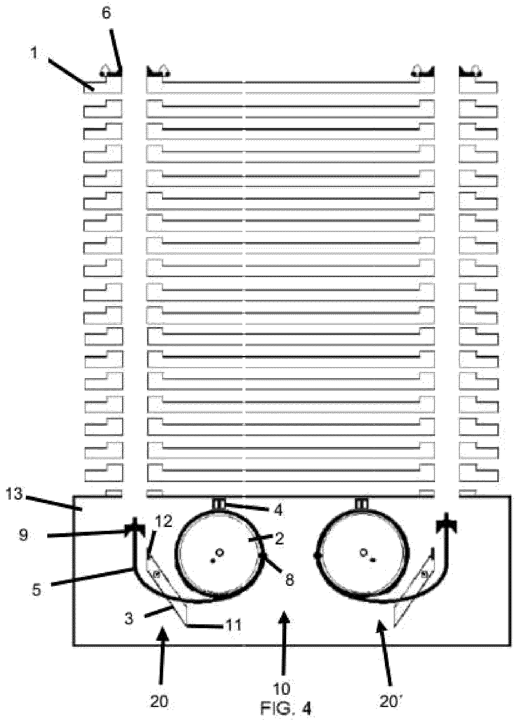

After these steps, the cable 5 along with its first fitting 8 is rolled on the inertia drum 2, the release mechanism 6 is left attached to the outermost spacecraft 1 of the stack and no debris is released to the space (figure 4).

After triggering the actuator 4, the elastic energy of the cable 5 motorizes the rotation of the inertia drum 2 to roll the cable 5, as previously described.

There might be also a spiral spring connected to the inertia drum 2 to maintain and/or to speed up and/or a dumper system to slow down the inertia drum rotation speed all the way till the cable 5 is fully stowed.

The release system for stacked spacecraft 7 may comprise a base member comprising a stopper to limit the rotation of the articulated lever 3 and a catcher that holds the articulated lever and prevents it to undesirably bounce back.

In an embodiment, the stacked spacecraft 7 are stacked satellites.

Several kinds of actuators 4 may be used.

Although the present invention has been fully described in connection with preferred embodiments, it is apparent that modifications can be made within the scope, not considering this as limited by these embodiments, but by the content of the following claims.

## Claims

1. Hold-down and release system (10) for stacked spacecraft (7), configured to change from a hold-down position to a released position with respect to a launcher (13), comprising at least one sub-system (20, 20'), each sub-system (20, 20') comprising a cable relaxation and rolling assembly configured to be attached to the launcher (13), **characterized in that** it comprises:
- an inertia drum (2),
- an articulated lever (3) configured for engagement and disengagement with the inertia drum (2) at a first end (11) of the articulated lever (3),
- an actuator (4) connected to the inertia drum (2) and configured to trigger it,
- a cable (5) comprising a first fitting (8), configured to engage with the articulated lever (3) at a second end (12) of the articulated lever (3), and having one of its ends connected to the inertia drum (2), such that the cable (5) can be wound on the inertia drum (2), and additionally comprising a second fitting (9) on the second end of the cable (5), and
- a release mechanism (6), configured to be attached to one end of the outermost stacked spacecraft (1), and to hold the second fitting (9) placed on the second end of the cable (5) in the hold-down position,
wherein in the hold-down position the articulated lever (3) is engaged with the inertia drum (2) and the first fitting (8) of the cable (5), and the cable (5) is tensioned between the first fitting (8) and the second fitting (9) to keep the stacked spacecraft (7) together, and in the release position the articulated lever (3) is disengaged with the inertia drum (2) and the first fitting (8) of the cable (5).

2. Hold-down and release system (10) for stacked spacecraft (7), according to claim 1, wherein the stacked spacecraft (7) are stacked satellites.

3. Hold-down and release system (10) for stacked spacecraft (7), according to any of the previous claims, wherein the articulated lever (3)is configured to rotate with respect to a base member comprising a stopper to limit the rotation of the articulated lever (3) and a catcher to retain it.

4. Hold-down and release system (10) for stacked spacecraft (7), according to any of the previous claims, wherein each sub-system comprises a spiral spring connected to the inertia drum to maintain and/or to speed up the inertia drum rotation.

5. Hold-down and release system (10) for stacked spacecraft (7), according to any of the previous claims, wherein each sub-system comprises a dumper system to slow down the inertia drum rotation.

6. Hold-down and release system (10) for stacked spacecraft (7), according to any of the previous claims, which comprises two sub-systems (20, 20') arranged symmetrically.

## Patentansprüche

1. Halte- und Freigabesystem (10) für gestapelte Raumfahrzeuge (7), das so konfiguriert ist, dass es bezogen auf eine Trägerrakete (13) aus einer Halteposition in eine Freigabeposition wechselt, wobei es mindestens ein Teilsystem (20, 20') umfasst, jedes Teilsystem (20, 20') umfassend
eine Kabelentspannungs- und Kabelaufrollvorrichtung, die so konzipiert ist, dass sie an die Trägerrakete (13) angebracht werden kann, **dadurch gekennzeichnet, dass** sie umfasst:
- eine Trägheitstrommel (2),
- einen Gelenkhebel (3), der zum Eingreifen in die und Ausrücken aus der Trägheitstrommel (2) an einem ersten Ende (11) des Gelenkhebels (3) konfiguriert ist,
- einen Aktuator (4), der mit der Trägheitstrommel (2) verbunden und so konfiguriert ist, dass er sie auslöst,
- ein Kabel (5), das einen ersten Anschluss (8) umfasst, der so konfiguriert ist, dass er mit dem Gelenkhebel (3) an einem zweiten Ende (12) des Gelenkhebels (3) in Eingriff steht und dessen eines Ende mit der Trägheitstrommel (2) verbunden ist, so dass das Kabel (5) auf die Trägheitstrommel (2) aufgewickelt werden kann, und zusätzlich einen zweiten Anschluss (9) an dem zweiten Ende des Kabels (5) umfasst, und
- einen Freigabemechanismus (6), der so konfiguriert ist, dass er an einem Ende des äußersten gestapelten Raumfahrzeugs (1) befestigt wird und den zweiten Anschluss (9), der am zweiten Ende des Kabels (5) platziert ist, in der Halteposition hält,
wobei in der Halteposition der Gelenkhebel (3) mit der Trägheitstrommel (2) und dem ersten Anschluss (8) des Kabels (5) in Eingriff steht und das Kabel (5) zwischen dem ersten Anschluss (8) und dem zweiten Anschluss (9) gespannt ist, um die gestapelten Raumfahrzeuge (7) zusammenzuhalten, und in der Freigabeposition der Gelenkhebel (3) aus der Trägheitstrommel (2) und dem ersten Anschluss (8) des Kabels (5) ausgeklinkt wird.

2. Halte- und Freigabesystem (10) für gestapelte Raumfahrzeuge (7) nach Anspruch 1, wobei die gestapelten Raumfahrzeuge (7) gestapelte Satelliten sind.

3. Halte- und Freigabesystem (10) für gestapelte Raumfahrzeuge (7) nach einem der vorstehenden Ansprüche, wobei der Gelenkhebel (3) so konfiguriert ist, dass er sich in Bezug auf ein Basiselement dreht, das einen Anschlag umfasst, um die Drehung des Gelenkhebels (3) zu begrenzen, und eine Greifvorrichtung, um ihn zu halten.

4. Halte- und Freigabesystem (10) für gestapelte Raumfahrzeuge (7) nach einem der vorstehenden Ansprüche, wobei jedes Teilsystem eine Spiralfeder umfasst, die mit der Trägheitstrommel verbunden ist, um die Trägheitstrommeldrehung aufrechtzuerhalten und/oder zu beschleunigen.

5. Halte- und Freigabesystem (10) für gestapelte Raumfahrzeuge (7) nach einem der vorstehenden Ansprüche, wobei jedes Teilsystem ein Kippsystem umfasst, um die Trägheitstrommeldrehung zu verlangsamen.

6. Halte- und Freigabesystem (10) für gestapelte Raumfahrzeuge (7) nach einem der vorstehenden Ansprüche, das zwei Teilsysteme (20, 20') umfasst, die symmetrisch angeordnet sind.

## Revendications

1. Système de retenue et de libération (10) pour engin spatial empilé (7), configuré pour passer d'une position de retenue à une position de libération par rapport à un lanceur (13), comprenant au moins un sous-système (20, 20'), chaque sous-système (20, 20') comprenant
un ensemble de relaxation et de roulement de câble configuré pour être fixé au lanceur (13), **caractérisé en ce qu'**il comprend :
- un tambour d'inertie (2),
- un levier articulé (3) configuré pour s'engager et se désengager du tambour d'inertie (2) à une première extrémité (11) du levier articulé (3),
- un actionneur (4) relié au tambour d'inertie (2) et configuré pour le déclencher,
- un câble (5) comprenant un premier raccord (8), configuré pour s'engager avec le levier articulé (3) à une seconde extrémité (12) du levier articulé (3), et ayant une de ses extrémités reliée au tambour d'inertie (2), de sorte que le câble (5) peut être enroulé sur le tambour d'inertie (2), et comprenant en outre un second raccord (9) sur la seconde extrémité du câble (5), et
- un mécanisme de libération (6), configuré pour être fixé à une extrémité de l'engin spatial empilé le plus à l'extérieur (1), et pour retenir le second raccord (9) placé sur la seconde extrémité du câble (5) en position de retenue,
dans lequel, dans la position de retenue, le levier articulé (3) est en prise avec le tambour d'inertie (2) et le premier raccord (8) du câble (5), et le câble (5) est tendu entre le premier raccord (8) et le second raccord (9) pour maintenir l'assemblage de l'engin spatial empilé (7), et dans la position de libération, le levier articulé (3) est désengagé du tambour d'inertie (2) et du premier raccord (8) du câble (5).

2. Système de retenue et de libération (10) pour engin spatial empilé (7) selon la revendication 1, dans lequel l'engin spatial empilé (7) est constitué de satellites empilés.

3. Système de retenue et de libération (10) pour engin spatial empilé (7) selon l'une quelconque des revendications précédentes, dans lequel le levier articulé (3) est configuré pour tourner par rapport à un élément de base comprenant une butée pour limiter la rotation du levier articulé (3) et un dispositif de capture pour le retenir.

4. Système de retenue et de libération (10) pour engin spatial empilé (7) selon l'une quelconque des revendications précédentes, dans lequel chaque sous-système comprend un ressort en spirale connecté au tambour d'inertie pour maintenir et/ou accélérer la rotation du tambour d'inertie.

5. Système de retenue et de libération (10) pour engin spatial empilé (7) selon l'une quelconque des revendications précédentes, dans lequel chaque sous-système comprend un système de tombereau pour ralentir la rotation du tambour d'inertie.

6. Système de retenue et de libération (10) pour engin spatial empilé (7) selon l'une quelconque des revendications précédentes, qui comprend deux sous-systèmes (20, 20') agencés symétriquement.
